# EUROPEAN PATENT SPECIFICATION

(11) **EP 4 187 116 B1**
(45) Date of publication and mention of the grant of the patent: **21.02.2024**
(21) Application number: 20951562.6
(22) Date of filing: 31.08.2020
(51) Int. Cl.: F16C 13/00, F16N 21/00, F16D 3/16, B21B 35/14, F16C 13/02, F16D 3/26, F16C 17/02, F16C 32/06, F16C 33/10

(54) **SPINDLE AND ROLLING EQUIPMENT COMPRISING SAME**
SPINDEL UND ROLLVORRICHTUNG DAMIT
BROCHE ROTATIVE ET ÉQUIPEMENT DE LAMINAGE LA COMPRENANT

(43) Date of publication of application: 31.05.2023
(73) Proprietor: Primetals Technologies Japan, Ltd., Hiroshima-shi, Hiroshima 733-8553 (JP)
(72) Inventor: WATANABE, Hiroaki, Hiroshima-shi, Hiroshima 733-8553 (JP); HIURA, Tadashi, Hiroshima-shi, Hiroshima 733-8553 (JP); ABE, Yuji, Hiroshima-shi, Hiroshima 733-8553 (JP); SUGIMOTO, Tatsunori, Hiroshima-shi, Hiroshima 733-8553 (JP)
(74) Representative: Strehl Schübel-Hopf & Partner
(86) International application number: PCT/JP2020/032846
(87) International publication number: WO 2022/044313

(56) References cited:
- GB-A- 919 532
- JP-A- S5 026 934
- JP-A- S5 026 934
- JP-A- H02 207 908
- JP-A- H02 207 908
- JP-A- H11 101 376
- JP-A- 2001 277 070
- JP-A- 2001 277 070
- JP-A- 2017 202 511
- JP-U- S52 111 734

## Description

### TECHNICAL FIELD

The present disclosure relates to a spindle and a rolling facility including the same.

### BACKGROUND

In a rolling facility for steel plates, etc., a spindle is provided between a motor and a mill roll in order to transmit a driving force of the motor to the mill roll.

Patent Document 1 discloses a slipper-type spindle universal j oint incorporated with a slipper metal. This spindle joint includes a spindle coupling (female coupling part) disposed on the electric motor side, a fork end (male coupling part) disposed on the mill roll side and inserted into an engagement recess of the spindle coupling, and a slipper metal disposed between the spindle coupling and the fork end at the engagement portion therebetween. Sliding of the slipper metal against the spindle coupling and the fork end allows the rotational axis of the mill roll to tilt with respect to the rotational axis of the motor when the rotational driving force of the rotor is transmitted to the mill roll. A spindle for transmitting a rotational driving force to a mill roll according to the preamble of claim 1 is known from GB 919 532 A.

### Citation List

### Patent Literature

Patent Document 1: JPS61-55518U (Utility Model)

### SUMMARY

### Problems to be Solved

In the engagement portion between the female coupling part and the male coupling part of the spindle, there is a circumferential area that is mainly responsible for torque transmission (high load area) and a circumferential area with relatively small torque transmission (low load area). During operation, the gap between the members tends to be narrow in the high load area, and the gap between the members tends to be relatively wide in the low load area. It is thus difficult to supply lubricant oil (oil) to the high load area where the gap between the members is relatively narrow. Therefore, when trying to supply sufficient lubricant oil to the engagement portion of the coupling, excessive lubricant oil may be supplied to the low load area, or insufficient lubricant oil may be supplied to the high load area.

In view of the above, an object of at least one embodiment of the present invention is to provide a spindle and rolling facility including the same whereby it is possible to appropriately supply oil to an engagement portion of a coupling.

### Solution to the Problems

A spindle according to at least one embodiment of the present invention is a spindle for transmitting a rotational driving force to a mill roll, comprising: a female coupling part having at one end side an engagement recess capable of receiving an engagement projection of a male coupling part; and a rotary joint including an annular rotor part disposed at another end side of the female coupling part and configured to rotate together with the female coupling part, and an annular stator part disposed on an outer peripheral side of the annular rotor part. The female coupling part includes at the one end side a pair of protruding portions each of which has a facing surface defining the engagement recess. The female coupling part has a plurality of oil supply passages for supplying oil to the engagement recess. The rotary joint has a plurality of annular oil passages each of which communicates with any of the plurality of oil supply passages. The plurality of oil supply passages includes at least one oil supply passage disposed corresponding to each of four areas obtained by dividing the engagement recess by a center line between the pair of facing surfaces and a straight line perpendicular to the center line, in a cross-section perpendicular to an axial direction of the spindle. The at least one oil supply passage disposed corresponding to one area of the four areas communicates with, among the plurality of annular oil passages, an annular oil passage different from an annular oil passage with which the at least one oil supply passage disposed corresponding to an area adjacent to the one area of the four areas communicates.

A rolling facility according to at least one embodiment of the present invention comprises: the above-described spindle; and a plurality of oil supply lines, connected to the spindle, for supplying oil to the plurality of annular oil passages, respectively.

### Advantageous Effects

At least one embodiment of the present invention provides a spindle and rolling facility including the same whereby it is possible to appropriately supply oil to an engagement portion of a coupling.

### BRIEF DESCRIPTION OF DRAWINGS

FIG. 1 is a schematic configuration diagram of a rolling facility according to an embodiment.
FIG. 2 is a schematic diagram of a spindle according to an embodiment.
FIG. 3 is a cross-sectional view taken along line A-A in FIG. 2.
FIG. 4 is a cross-sectional view taken along line B-B in FIG. 2.
FIG. 5 is a cross-sectional view taken along line C-C of FIG. 2.
FIG. 6 is a partial cross-sectional view of the spindle shown in FIG. 2, taken along the axial direction.
FIG. 7 is a schematic configuration diagram of a rolling facility according to an embodiment.
FIG. 8 is a schematic configuration diagram of a rolling facility according to an embodiment.
FIG. 9 is a schematic configuration diagram of a rolling facility according to an embodiment.

### DETAILED DESCRIPTION

Embodiments of the present invention will now be described in detail with reference to the accompanying drawings. It is intended, however, that unless particularly identified, dimensions, materials, shapes, relative positions, and the like of components described in the embodiments shall be interpreted as illustrative only and not intended to limit the scope of the present invention.

### (Configuration of rolling facility)

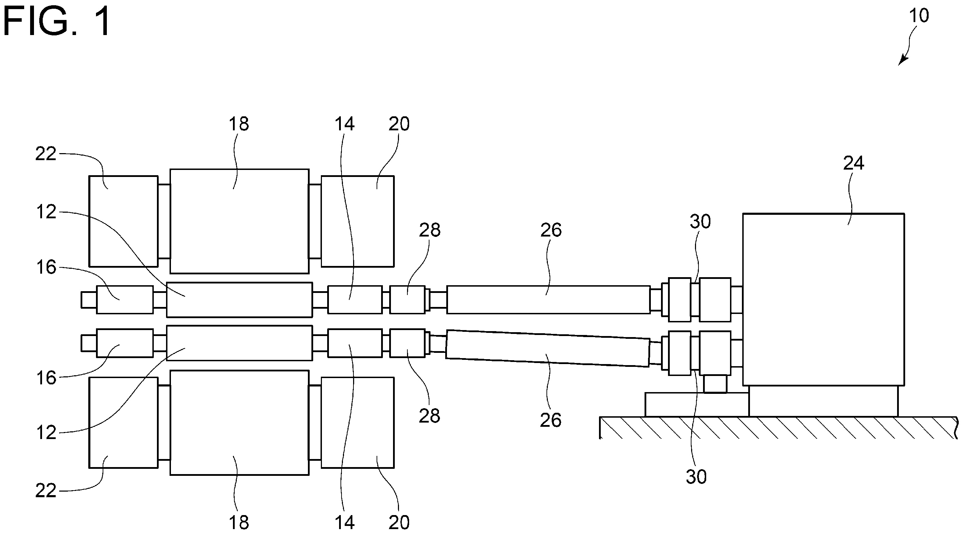

FIG. 1 is a schematic configuration diagram of a rolling facility to which a spindle is applied according to some embodiments. A rolling facility 10 shown in this figure is provided with a pair of mill rolls (work rolls) 12 disposed so as to sandwich a rolled material, and a pair of backup rolls 18 disposed so as to sandwich the pair of mill rolls 12. The pair of mill rolls 12 are rotatably supported in a housing (not shown) by axle boxes 14 and 16 disposed at axial end portions of the mill rolls 12. The pair of backup rolls 18 are rotatably supported in the housing by axle boxes 20 and 22 disposed at axial end portions of the backup rolls 18.

The rolling facility 10 is provided with a driving device 24 including a motor for generating a driving force for rotating the pair of mill rolls 12, and a pair of spindles 26 for transmitting the driving force generated by the driving device 24 to the pair of mill rolls 12. The driving device 24 includes a pair of driving shafts 30 to which the rotational driving force generated by the motor is transmitted. One end portions of the pair of spindles 26 are fitted to the pair of driving shafts 30, respectively. The other end portions of the pair of spindles 26 are connected to the axial end portions of the pair of mill rolls 12 via couplings 28 (including a female coupling part 32 and a male coupling part 36, which will be described later).

The rolling facility 10 includes a device (e.g., an oil supply line connected to the spindle 26, which will be described later) for supplying oil such as lubricant oil to each component of the rolling facility 10.

### (Configuration of spindle)

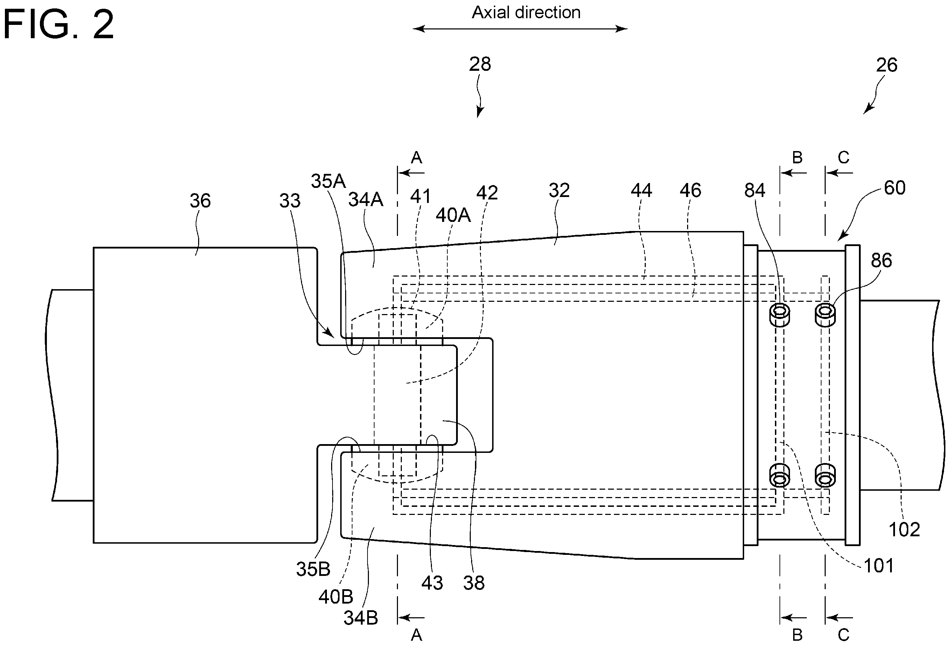

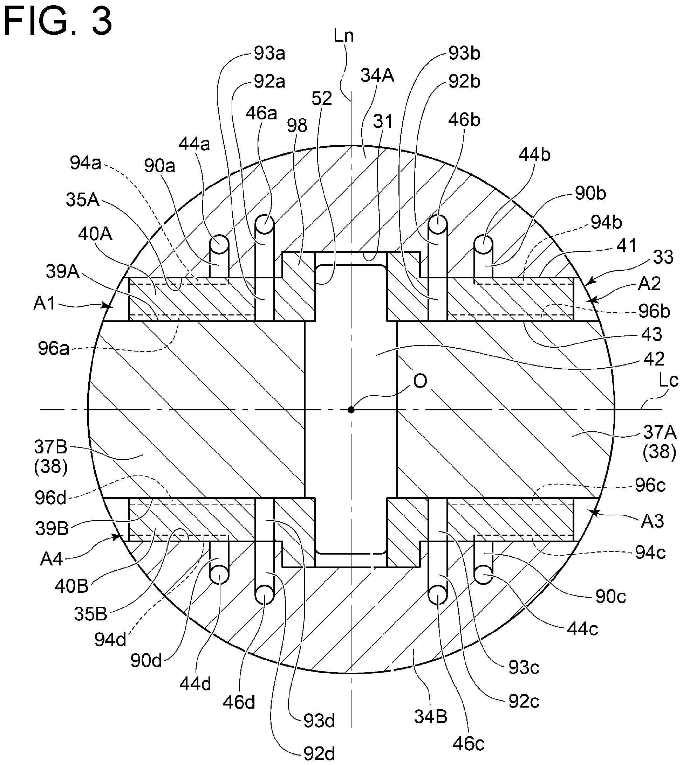

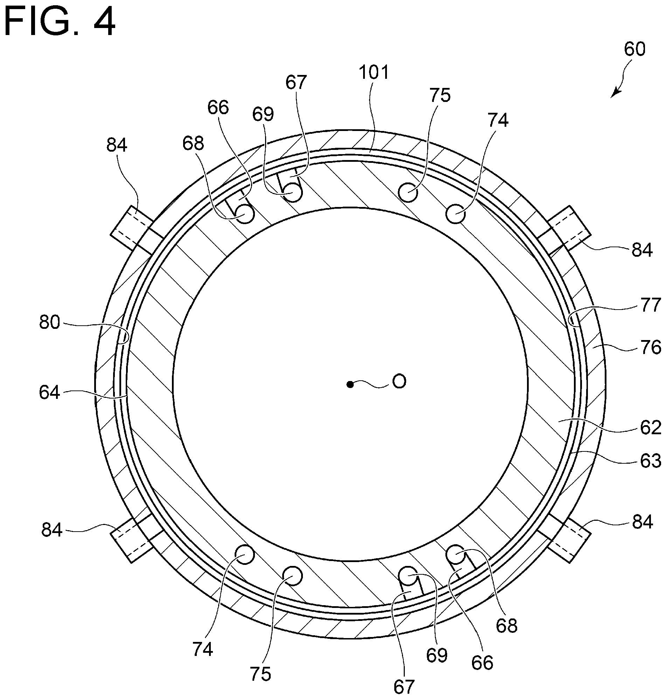

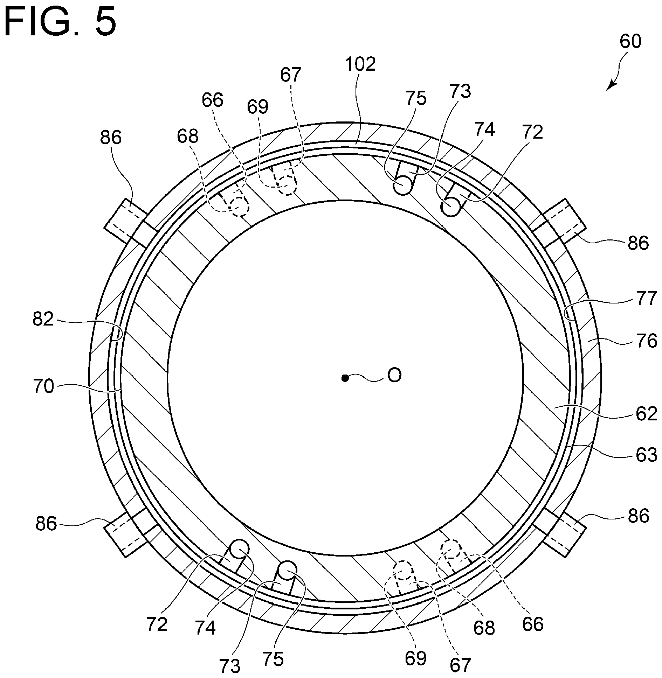

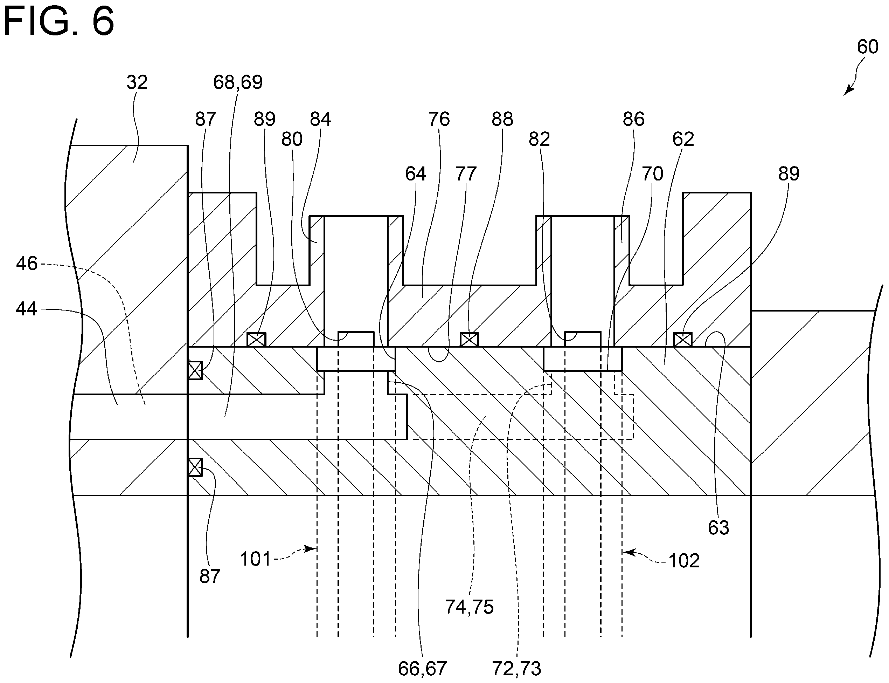

FIG. 2 is a schematic diagram of the spindle 26 according to an embodiment. FIGs. 3 to 5 are cross-sectional views of the spindle 26 shown in FIG. 2, perpendicular to the axial direction. FIG. 3 is a view showing cross-section A-A in FIG. 2, FIG. 4 is a view showing cross-section B-B in FIG. 2, and FIG. 5 is a view showing cross-section C-C in FIG. 2. FIG. 6 is a partial cross-sectional view of the spindle shown in FIG. 2, taken along the axial direction.

As shown in FIG. 2, the spindle 26 includes a female coupling part 32 capable of engaging at one end with a male coupling part 36 provided at the axial end portion of the mill roll 12, and a rotary joint 60 disposed at the other end of the female coupling part 32.

As shown in FIGs. 2 and 3, the female coupling part 32 has a pair of protruding portions 34A, 34B protruding in the axial direction at one end side. The pair of protruding portions 34A, 34B have facing surfaces 35A, 35B facing each other, respectively. An engagement recess 33 defined by the pair of facing surfaces 35A, 35B is formed between the protruding portions 34A, 34B. The engagement recess 33 has a shape that is recessed in the axial direction. The engagement recess 33 can receive an engagement projection 38 of the male coupling part 36.

The engagement projection 38 of the male coupling part 36 includes a pair of protruding portions 37A, 37B protruding in the axial direction to constitute a fork portion. As shown in FIG. 3, the pair of protruding portions 37A, 37B are arranged along a center line Lc between the pair of facing surfaces 35A, 35B of the female coupling part 32 in a cross-section perpendicular to the axial direction of the spindle 26. The engagement projection 38 of the male coupling part 36 is configured to be inserted into the engagement recess of the female coupling part 32.

The spindle 26 further includes a pin 42 disposed between the pair of protruding portions 34A, 34B, and a pair of slipper metals 40A, 40B supported at both end portions of the pin 42.

As shown in FIG. 3, the pin 42 extends along a straight line Ln perpendicular to the center line Lc, in a cross-section perpendicular to the axial direction of the spindle 26, between the pair of protruding portions 34A, 34B of the female coupling part 32 so as to pass between the pair of protruding portions 37A, 37B of the male coupling part 36. In FIG. 3, the straight line Ln is a straight line passing through the rotational axis O of the spindle 26 and perpendicular to the center line Lc.

The slipper metals 40A, 40B are disposed between the facing surfaces 35A, 35B of the female coupling part 32 and the protruding portions 37A, 37B of the male coupling part 36. The slipper metals 40A, 40B have projections 98 which protrude toward the protruding portions 34A, 34B of the female coupling part 32, and holes 52 into which both end portions of the pin 42 can be engaged. Both end portions of the pin 42 are inserted into the holes 52 of the slipper metals 40A, 40B, and the projections 98 engage with recesses 31 provided on the facing surfaces 35A, 35B of the female coupling part 32.

Thus, the female coupling part 32 and the male coupling part 36 are engaged with each other with the slipper metals 40A, 40B interposed therebetween. Accordingly, during operation of the rolling facility 10, the rotational driving force of the motor (driving device 24) is transmitted from the protruding portions 34A, 34B of the female coupling part 32 of the spindle 26 to the protruding portions 37A, 37B of the male coupling part 36 via the slipper metals 40A, 40B. Thus, the rotational driving force is transmitted to the mill roll 12 connected to the male coupling part 36.

Each slipper metal 40A, 40B has a first surface 41 capable of sliding against the facing surface 35A, 35B of the protruding portion 34A, 34B of the female coupling part 32. Further, each slipper metal 40A, 40B has a second surface 43 capable of sliding against surfaces 39A, 39B of the protruding portions 37A, 37B of the male coupling part 36. As shown in FIG. 2, the facing surfaces 35A, 35B of the female coupling part 32 and the first surfaces 41 of the slipper metals 40A, 40B have a curved shape. The surfaces 39A, 39B of the male coupling part 36 and the second surfaces 43 of the slipper metals 40A, 40B have a planar shape. Accordingly, sliding between the facing surfaces 35A, 35B of the female coupling part 32 and the first surfaces 41 of the slipper metals 40A, 40B and sliding between the surfaces 39A, 39B of the male coupling part 36 and the second surfaces 43 of the slipper metals 40A, 40B allow the rotational driving force to be transmitted with the rotational axis of the spindle 26 tilted with respect to the rotational axis of mill roll 12.

As shown in FIG. 3, in the engagement recess 33, a first space 94 (94a to 94d) is formed between the facing surface 35A, 35B of the protruding portion 34A, 34B of the female coupling part 32 and the first surface 41 of the slipper metal 40A, 40B. The first space 94 may be formed by a groove provided on the first surface 41 of the slipper metal 40A, 40B. In the engagement recess 33, a second space 96 (96a to 96d) is formed between the surface 39A, 39B of the male coupling part 36 and the second surface 43 of the slipper metal 40A, 40B. The second space 96 may be formed by a groove provided on the second surface 43 of the slipper metal 40A, 40B.

Here, in a cross-section perpendicular to the axial direction of the spindle 26, four areas obtained by dividing the engagement recess 33 by the center line Lc of the pair of facing surfaces 35A, 35B and the straight line Ln perpendicular to the center line Lc are defined as areas A1 to A4 in order of circumferential arrangement (see FIG. 3).

The female coupling part 32 has a plurality of oil supply passages 90, 92 for supplying lubricant oil (oil) to the engagement recess 33. The plurality of oil supply passages 90 includes oil supply passages 90a to 90d disposed corresponding to the four areas A1 to A4. The plurality of oil supply passages 92 includes oil supply passages 92a to 92d disposed corresponding to the four areas A1 to A4. Each of the plurality of oil supply passages 90, 92 communicates with any of annular oil passages 101, 102 formed in the rotary joint 60.

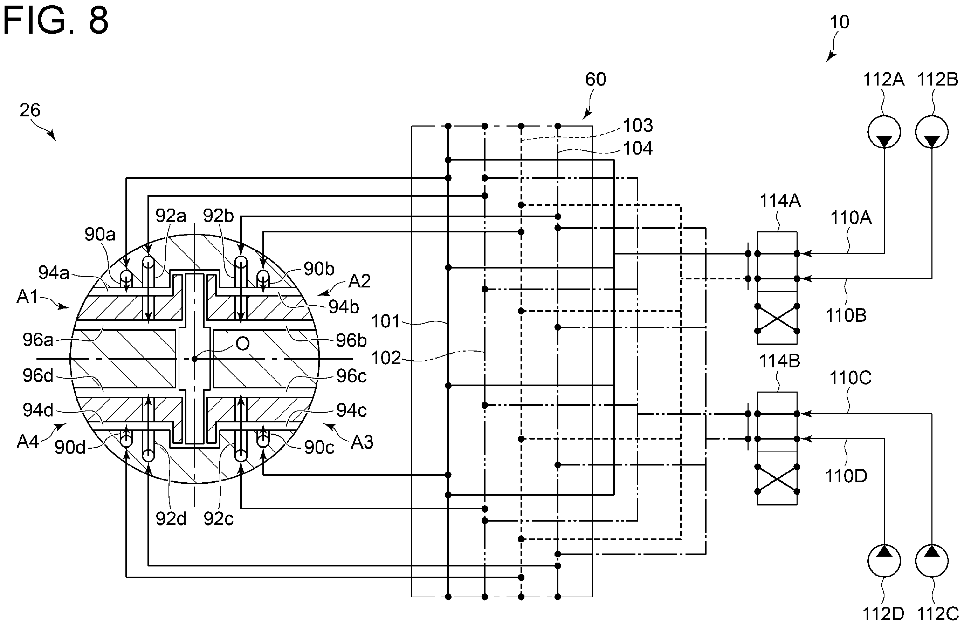

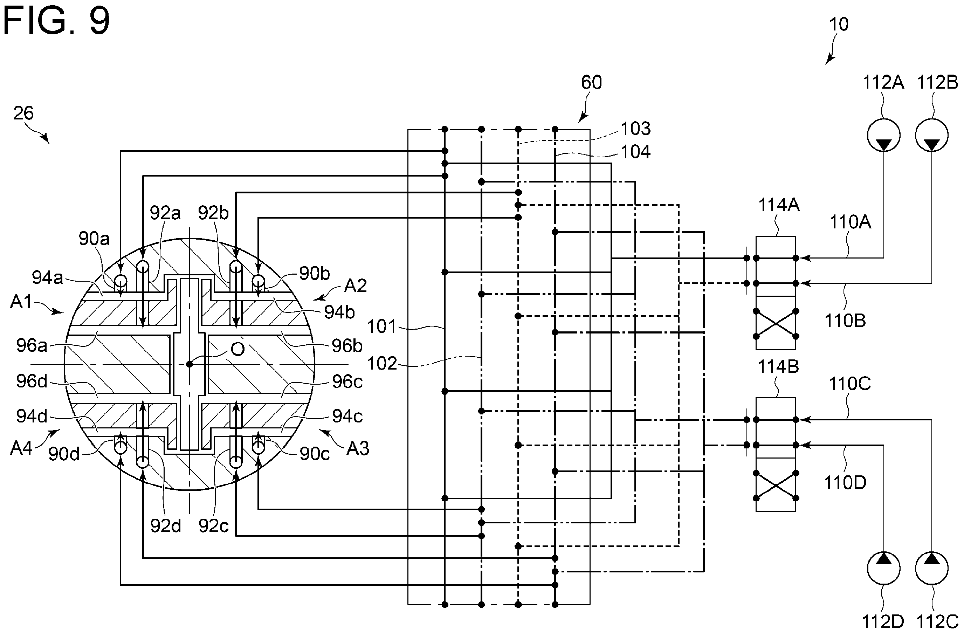

In the embodiments shown in FIGs. 2 to 6, two annular oil passages 101, 102 are formed in the rotary joint 60. In another embodiment, three or more annular oil passages may be formed in the rotary joint 60. In the exemplary embodiments shown in FIGs. 8 and 9 (described later), four annular oil passages 101 to 104 are formed in the rotary joint 60.

In the exemplary embodiment shown in FIG. 2, the female coupling part 32 and the rotary joint 60 are disposed adjacent to each other, and as described later, any of the plurality of oil supply passages 90, 92 communicates with any of the plurality of annular oil passages 101, 102 through an axial oil passage 44 formed in the female coupling part 32. In other embodiments, the female coupling part 32 and the rotary joint 60 may not be adjacent but spaced apart from each other. In this case, any of the plurality of oil supply passages 90, 92 may communicate with any of the plurality of annular oil passages 101, 102 through a pipe provided between the female coupling part 32 and the rotary joint 60.

As shown in FIGs. 2 and 3, the plurality of oil supply passages 90 (90a to 90d) are first passages communicating with the first spaces 94 (94a to 94d). Each of the oil supply passages 90 (90a to 90d) is connected to an axial oil passage 44 (44a to 44d) formed in the female coupling part 32 and extending along the axial direction, and extends from the axial oil passage 44 to the first space 94 (94a to 94d) along the direction perpendicular to the center line Lc. Further, the plurality of oil supply passages 90 communicate with any of the annular oil passages 101, 102 through the axial oil passages 44. Oil from any of the annular oil passages 101, 102 is supplied to the first spaces 94 (94a to 94d) through the plurality of oil supply passages 90 (90a to 90d), respectively. The first spaces 94a to 94d are disposed corresponding to the four areas A1 to A4.

The plurality of oil supply passages 92 (92a to 92d) are second passages communicating with the second spaces 96 (96a to 96d). Each of the oil supply passages 92 (92a to 92d) is connected to an axial oil passage 46 (46a to 46d) formed in the female coupling part 32 and extending along the axial direction, and extends from the axial oil passage 46 to the second space 96 (96a to 96d) along the direction perpendicular to the center line Lc. Further, the plurality of oil supply passages 92 communicate with any of the annular oil passages 101, 102 through the axial oil passages 46. Further, the slipper metals 40A, 40B have oil supply passages 93 (93a to 93d) communicating with the oil supply passages 92 (92a to 92d), respectively. Oil from any of the annular oil passages 101, 102 is supplied to the second spaces 96 (96a to 96d) through the plurality of oil supply passages 92 (92a to 92d) and the oil supply passages 93 (93a to 93d), respectively. The second spaces 96a to 96d are disposed corresponding to the four areas A1 to A4.

In some embodiments, as shown in FIG. 3, the axial oil passages 44, 46 disposed in the female coupling part 32 are displaced from each other in the circumferential direction. In this case, since the axial oil passages 44, 46 are displaced from each other in the circumferential direction, the machining to connect the axial oil passages 44, 46 and the annular oil passages 101, 102 is relatively easy.

As shown in FIGs. 2, 4, and 5, the rotary joint 60 includes an annular rotor part 62 disposed at the other end side (opposite to one end side with the engagement recess 33) of the female coupling part 32, and an annular stator part 76 disposed on the outer peripheral side of the annular rotor part 62. The annular rotor part 62 is configured to rotate together with the female coupling part 32.

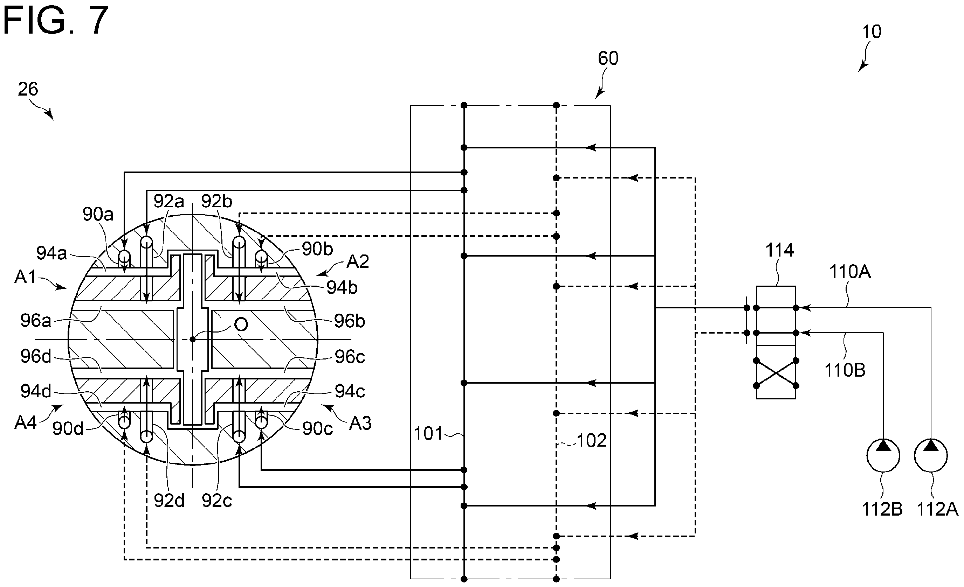

The rotary joint 60 has a plurality of annular oil passages 101, 102 disposed along the circumferential direction. Each of the plurality of annular oil passages 101, 102 communicates with any of the plurality of oil supply passages 90 (90a to 90d), 92 (92a to 92d). The annular stator part 76 includes a plurality of oil supply ports 84, 86 for supplying oil to the plurality of annular oil passages 101, 102, respectively. The plurality of oil supply ports 84, 86 are connected to oil supply lines 110 (see FIGs. 7 to 9), respectively. As shown in FIGs. 4 and 5, a plurality of oil supply ports 84, 86 may be provided for each of the annular oil passages 101, 102. The plurality of oil supply ports 84, 86 may be arranged at intervals in the circumferential direction.

The plurality of annular oil passages 101, 102 are disposed between an outer peripheral surface 63 of the annular rotor part 62 and an inner peripheral surface 77 of the annular stator part 76. Therefore, oil from the oil supply ports 84, 86 disposed in the annular stator part 76 can be appropriately supplied to the engagement recess 33 of the female coupling part 32, while rotating the female coupling part 32 and the annular rotor part 62.

The plurality of annular oil passages 101, 102 may be formed at least partially by circumferential grooves provided on at least one of the outer peripheral surface 63 of the annular rotor part 62 or the inner peripheral surface 77 of the annular stator part 76.

In the exemplary embodiment shown in FIG. 6, the annular oil passage 101 is formed by an annular circumferential groove 64 provided on the outer peripheral surface 63 of the annular rotor part 62 and an annular circumferential groove 80 provided on the inner peripheral surface 77 of the annular stator part 76. Further, the annular oil passage 102 is formed by an annular circumferential groove 70 provided on the outer peripheral surface 63 of the annular rotor part 62 and an annular circumferential groove 82 provided on the inner peripheral surface 77 of the annular stator part 76.

In some embodiments, the annular oil passage 101 may be formed by a circumferential groove provided on the outer peripheral surface 63 of the annular rotor part 62 and extending partially in the circumferential direction or a circumferential groove provided on the inner peripheral surface 77 of the annular stator part 76 and extending partially in the circumferential direction.

In some embodiments, as shown in FIGs. 2 and 6, the plurality of annular oil passages 101, 102 are displaced from each other in the axial direction. Thus, lubricant oil from different supply sources can be appropriately supplied to the engagement recess 33 of the female coupling part 32 through the plurality of annular oil passages 101, 102 disposed from each other in the axial direction.

The annular oil passage 101 communicates with any of the axial oil passages 44, 46 of the female coupling part 32 through axial passages 68, 69 disposed in the annular rotor part 62 and radial passages 66, 67 disposed between the annular oil passage 101 and the axial passages 68, 69. Thus, oil supplied through the oil supply port 84 is supplied through these passages to the engagement recess 33 (e.g., first space 94 or second space 96) of the female coupling part 32.

In the exemplary embodiments shown in FIGs. 2 to 6, the axial passages 68 of the annular rotor part 62 are connected to the axial oil passages 44a, 44c of the female coupling part, and the axial passages 69 of the annular rotor part 62 are connected to the axial oil passages 46a, 46c of the female coupling part.

The annular oil passage 102 communicates with any of the axial oil passages 44, 46 of the female coupling part 32 through axial passages 74, 75 disposed in the annular rotor part 62 and radial passages 72, 73 disposed between the annular oil passage 102 and the axial passages 74, 75. Thus, oil supplied through the oil supply port 86 is supplied through these passages to the engagement recess 33 (e.g., first space 94 or second space 96) of the female coupling part 32.

In the exemplary embodiments shown in FIGs. 2 to 6, the axial passages 74 of the annular rotor part 62 are connected to the axial oil passages 44b, 44d of the female coupling part, and the axial passages 75 of the annular rotor part 62 are connected to the axial oil passages 46b, 46d of the female coupling part.

FIGs. 7 to 9 are each a schematic configuration diagram of a rolling facility including a spindle according to an embodiment. FIGs. 7 to 9 include a schematic diagram of the cross-section of the female coupling part 32 as in FIG. 3 and a schematic diagram of the rotary joint 60 developed in the circumferential direction. Annular oil passages (101 to 104) disposed in the rotary joint 60 are illustrated linearly.

FIG. 7 schematically illustrates the exemplary embodiment shown in FIGs. 2 to 6. The exemplary embodiment shown in FIGs. 8 and 9 has the same basic configuration as that shown in FIG. 7, but differs from the embodiment shown in FIG. 7 in that four annular oil passages 101 to 104 are disposed in the rotary joint 60.

In the embodiments shown in FIGs. 7 to 9, the rolling facility 10 is provided with the above-described spindle 26, and a plurality of oil supply lines 110A to 110D (in FIG. 7, 110A and 110B), connected to the spindle 26, for supplying oil to the plurality of annular oil passages 101 to 104 (in FIG. 7, 110A and 110B), respectively.

In some embodiments, for example, as shown in FIGs. 7 to 9, the oil supply passage 90, 92 disposed corresponding to one area of the four areas A1 to A4 (four areas obtained by dividing the engagement recess 33 of the female coupling part 32 by the center line Lc and the straight line Ln) communicates with an annular oil passage different from the annular oil passage with which the oil supply passage 90, 92 disposed corresponding to an area adjacent to the one area communicates.

Specifically, in the exemplary embodiment shown in FIG. 7, the oil supply passage 90a and the oil supply passage 92a disposed corresponding to area A1 communicate with the annular oil passage 101. This annular oil passage 101 is different from the annular oil passage 102 with which the oil supply passages 90b and 90d and the oil supply passages 92b and 92d disposed corresponding to areas A2 and A4, which are adjacent to area A1, communicate.

In the exemplary embodiment shown in FIG. 8, the oil supply passage 90a disposed corresponding to area A1 communicates with the annular oil passage 101, and the oil supply passage 92a communicates with the annular oil passage 102. These annular oil passages 101, 102 are different from the annular oil passage 103 with which the oil supply passages 90b and 90d disposed corresponding to areas A2 and A4, which are adjacent to area A1, communicate, and from the annular oil passage 104 with which the oil supply passages 92b and 92d communicate.

In the exemplary embodiment shown in FIG. 9, the oil supply passage 90a and the oil supply passage 92a disposed corresponding to area A1 communicate with the annular oil passage 101. This annular oil passage 101 is different from the annular oil passage 103 with which the oil supply passages 90b and 92b disposed corresponding to area A2, which is adjacent to area A1, communicate. Further, the annular oil passage 101 is different from the annular oil passage 104 with which the oil supply passages 90d and 92d disposed corresponding to area A4, which is adj acent to area A1, communicate.

In the embodiments shown in FIGs. 7 to 9, the same explanation applies to areas A2 to A4 other than area A1.

Of the four areas A1 to A4 at the engagement portion between the female coupling part 32 and the male coupling part 36, one of two circumferentially adjacent areas (A1 and A2, A2 and A3, A3 and A4, or A4 and A1) is a high load area with relatively large torque transmission during operation, and the other is a low load area with relatively small torque transmission during operation. For example, when areas A1 and A3 are high load areas, areas A2 and A4 are low load areas.

In the above-described embodiment, the oil supply passages 90a to 90d, 92a to 92d disposed corresponding to adjacent areas (one high load area and the other low load area) of the four areas communicate with different annular oil passages 101 to 104. That is, oil from different oil supply sources can be supplied to the oil supply passages disposed corresponding to the high load area and the low load area, respectively. Thus, it is possible to appropriately supply lubricant oil to both the high load area and the low load area.

In some embodiments, for example, as shown in FIGs. 7 and 8, each of the at least one oil supply passage 90, 92 disposed corresponding to one area of the four areas A1 to A4 communicates with an annular oil passage identical to the annular oil passage with which any of the oil supply passages 90, 92 disposed corresponding to an area not adjacent to the one area of the four areas A1 to A4 communicates.

Specifically, in the exemplary embodiment shown in FIG. 7, each of the oil supply passages 90a, 92a disposed corresponding to area A1 of the four areas A1 to A4 communicates with the annular oil passage 101. This annular oil passage 101 is identical to the annular oil passage 101 with which the oil supply passages 90c, 92c disposed corresponding to area A3, which is not adjacent to area A1, communicate.

In the exemplary embodiment shown in FIG. 8, the oil supply passage 90a disposed corresponding to area A1 of the four areas A1 to A4 communicates with the annular oil passage 101. This annular oil passage 101 is identical to the annular oil passage 101 with which the oil supply passage 90c disposed corresponding to area A3, which is not adjacent to area A1, communicates. Further, the oil supply passage 92a disposed corresponding to area A1 communicates with the annular oil passage 102. This annular oil passage 102 is identical to the annular oil passage 102 with which the oil supply passage 92c disposed corresponding to area A3, which is not adjacent to area A1, communicates.

In the embodiments shown in FIGs. 7 to 8, the same explanation applies to areas A2 to A4 other than area A1.

Of the four areas A1 to A4, two areas that are not adjacent to each other in the circumferential direction (two areas on opposite sides of the rotational axis O of the spindle 26; for example, areas A1 and A3, or A2 and A4) are both high load areas or low load areas. According to the above-described embodiments, since the oil supply passage (90a, 92a) disposed corresponding to one area (e.g., A1) communicates with the annular oil passage (101) with which the oil supply passage (90c, 92c) disposed corresponding to an area (e.g., A3) not adjacent to the one area communicates, the oil supply path to these areas can be at least partially shared. Thus, it is possible to appropriately supply lubricant oil to both the high load area and the low load area with a relatively simple configuration.

In some embodiments, for example, as shown in FIG. 9, each of the oil supply passages 90, 92 disposed corresponding to one area of the four areas A1 to A4 communicates with an annular oil passage different from the annular oil passage with which each of the oil supply passages 90, 92 disposed corresponding to an area not adjacent to the one area of the four areas A1 to A4 communicates.

Specifically, in the exemplary embodiment shown in FIG. 9, the oil supply passages 90a, 92a disposed corresponding to area A1 communicate with the annular oil passage 101. This annular oil passage 101 is different from the annular oil passage 103 with which the oil supply passages 90c, 92c disposed corresponding to area A3, which is not adjacent to area A1, communicate.

In the embodiment shown in FIG. 9, the same explanation applies to areas A2 to A4 other than area A1.

According to the above-described embodiments, since the oil supply passage (90a, 92a) disposed corresponding to one area (e.g., A1) and the oil supply passage (90c, 92c) disposed corresponding to an area (e.g., A3) not adjacent to the one area communicate with different annular oil passages (101, 103), the oil supply routes to these areas can be separated. That is, since the oil supply routes are separated between the two high load areas or between the two low load areas (e.g., between areas A1 and A3), lubricant oil can be supplied to each of the four areas A1 to A4 at pressure level suitable for each area. Thus, it is easier to supply lubricant oil to each area more appropriately.

In some embodiments, for example, as shown in FIG. 8, in each of the four areas A1 to A4, the first passage (oil supply passage 90 communicating with the first space 94) and the second passage (oil supply passage 92 communicating with the second space 96) communicate with different annular oil passages among the plurality of annular oil passages 101 to 104.

Specifically, in the exemplary embodiment shown in FIG. 8, for example, in area A1, the oil supply passage 90a (first passage) communicating with the first space 94a communicates with the annular oil passage 101. This annular oil passage 101 is different from the annular oil passage 102 with which the oil supply passage 92a (second passage) communicating with the second space 96a communicates in area A1.

In the embodiment shown in FIG. 8, the same explanation applies to areas A2 to A4 other than area A1.

According to the above-described embodiments, since the first passage (oil supply passage 90) communicating with the first space 94 and the second passage (oil supply passage 92) communicating with the second space 96 communicate with different annular oil passages 101 to 104, lubricant oil can be supplied to the first space 94 and the second space 96 at different pressure levels. Thus, it is easier to supply lubricant oil to each of the first space 94 and the second space 96 more appropriately.

In some embodiments, for example, as shown in FIGs. 7 to 9, the rolling facility 10 may be provided with a plurality of pumps 112Ato 112D disposed on the plurality of oil supply lines 110A to 110D, respectively.

In this case, since the pumps 112A to 112D are individually disposed for the plurality of oil supply lines 110A to 110D, the pressure level of each oil supply line 110A to 110D can be individually adjusted. Thus, it is possible to appropriately supply lubricant oil to both the high load area and the low load area of the four areas.

In some embodiments, any of the plurality of oil supply lines 110A to 110D may be provided with a throttle portion. When any of the plurality of oil supply lines 110 is provided with a throttle portion, by contracting the amount of oil supplied from the oil supply line 110 to the female coupling part 32, the balance of oil supply through the oil supply lines 110A to 110D can be adjusted.

In some embodiments, two or more of the plurality of oil supply lines 110A to 110D may be provided with distribution valves to distribute and supply oil. In this case, since oil is distributed to two or more oil supply lines by the distribution valves, oil can be supplied to the oil supply lines at an appropriate distribution ratio.

In some embodiments, for example, as shown in FIGs. 7 to 9, the rolling facility 10 is provided with a switch valve 114 capable of switching a connection destination of the plurality of annular oil passages 101 to 104 between the plurality of oil supply lines 110A to 110D.

In the exemplary embodiment shown in FIG. 7, the rolling facility 10 is provided with a switch valve 114 capable of switching a connection destination of the annular oil passage 101 and the annular oil passage 102 between the oil supply lines 110A and 110B.

In the exemplary embodiments shown in FIGs. 8 and 9, the rolling facility 10 is provided with a switch valve 114A capable of switching a connection destination of the annular oil passage 101 and the annular oil passage 103 between the oil supply lines 110A and 110B and a switch valve 114B capable of switching a connection destination of the annular oil passage 102 and the annular oil passage 104 between the oil supply lines 110C and 110D.

In a reverse rolling apparatus configured to roll a material while reciprocating the material, the mill rolls 12 and the spindles 26 rotate in opposite directions between forward and return passes of the material. Further, high and low load areas in the four areas A1 to A4 of the engagement recess 33 of the female coupling part 32 are switched between the forward and return passes of the material. For example, if areas A1 and A3 are high load areas and areas A2 and A4 are low load areas on the forward pass, areas A1 and A3 are low load areas and areas A2 and A4 are high load areas on the return pass.

In this regard, according to the above-described embodiments, with the switch valve 114A, 114B capable of switching the connection destination of the annular oil passages 101 to 104 between the oil supply lines 110A to 110D, the area A1 to A4 to which oil is supplied from each oil supply line 110A to 110D can be switched by operating the switch valve 114 appropriately with the change in the direction of rotation of the mill rolls 12 and the spindles 26. Thus, in a reverse rolling apparatus, on both forward and return passes of a material, it is possible to appropriately supply lubricant oil to both the high load area and the low load area.

When the switch valve 114 is provided, the above-described throttle portion is provided upstream of the switch valve 114 in the oil supply lines 110A to 110D.

Further, when the switch valve 114 is provided, the above-described distribution valve is provided upstream of the switch valve 114 in the oil supply lines 110A to 110D.

In some embodiments, the plurality of oil supply lines 110A to 110D are disposed independently of each other. In other words, each of the plurality of oil supply lines 110A to 110D (e.g., oil supply line 110A) is not branched from the other oil supply lines (oil supply lines 110B to 110D).

In this case, since the plurality of oil supply lines 110A to 110D are disposed independently of each other, it is possible to appropriately maintain the pressure levels of the oil supply routes corresponding to the annular oil passages 101 to 104, respectively. Thus, it is possible to appropriately supply lubricant oil to both the high load area and the low load area of the engagement recess 33 of the female coupling part 32.

In some embodiments, a seal part may be provided between adjacent annular oil passages among the plurality of annular oil passages 101 to 104 to reduce leakage of lubricant oil between these annular oil passages. For example, in the embodiment shown in FIG. 6, a seal part 88 is provided between the annular oil passage 101 and the annular oil passage 102 which are adjacent in the axial direction.

The seal part 88 makes it easier to appropriately maintain the pressure levels of the oil supply routes corresponding to the annular oil passages 101, 102, respectively.

As shown in FIG. 6, a seal part 89 may be provided between the annular rotor part 62 and the annular stator part 76 to reduce oil leakage from the annular oil passages 101, 102, etc. Further, as shown in FIG. 6, a seal part 87 may be provided between the annular rotor part 62 and the female coupling part 32 to reduce oil leakage from the axial passages 68, 69, etc.

Hereinafter, the overview of the spindle and the rolling facility including the same according to some embodiments will be described.
(1) A spindle according to at least one embodiment of the present invention is a spindle for transmitting a rotational driving force to a mill roll, comprising: a female coupling part having at one end side an engagement recess capable of receiving an engagement projection of a male coupling part; and a rotary joint including an annular rotor part disposed at another end side of the female coupling part and configured to rotate together with the female coupling part, and an annular stator part disposed on an outer peripheral side of the annular rotor part. The female coupling part includes at the one end side a pair of protruding portions each of which has a facing surface defining the engagement recess. The female coupling part has a plurality of oil supply passages for supplying oil to the engagement recess. The rotary joint has a plurality of annular oil passages each of which communicates with any of the plurality of oil supply passages. The plurality of oil supply passages includes at least one oil supply passage disposed corresponding to each of four areas obtained by dividing the engagement recess by a center line between the pair of facing surfaces and a straight line perpendicular to the center line, in a cross-section perpendicular to an axial direction of the spindle. The at least one oil supply passage disposed corresponding to one area of the four areas communicates with, among the plurality of annular oil passages, an annular oil passage different from an annular oil passage with which the at least one oil supply passage disposed corresponding to an area adjacent to the one area of the four areas communicates.

Of the four areas of the engagement recess of the female coupling part, one of two circumferentially adjacent areas is a high load area with relatively large torque transmission during operation, and the other is a low load area with relatively small torque transmission during operation. With the above configuration (1), the oil supply passages disposed corresponding to adjacent areas (one high load area and the other low load area) of the four areas communicate with different annular oil passages. That is, oil from different oil supply sources can be supplied to the oil supply passages disposed corresponding to the high load area and the low load area, respectively. Thus, it is possible to appropriately supply lubricant oil to both the high load area and the low load area.

(2) In some embodiments, in the above configuration (1), each of the at least one oil supply passage disposed corresponding to one area of the four areas communicates with an annular oil passage identical to an annular oil passage with which any of the at least one oil supply passage disposed corresponding to an area not adjacent to the one area of the four areas communicates.

Of the four areas, two areas that are not adjacent to each other in the circumferential direction (two areas on opposite sides of the rotational axis) are both high load areas or low load areas. With the above configuration (2), since the oil supply passage disposed corresponding to one area communicates with the annular oil passage with which the oil supply passage disposed corresponding to an area not adjacent to the one area communicates, the oil supply path to these areas can be at least partially shared. Thus, it is possible to appropriately supply lubricant oil to both the high load area and the low load area with a relatively simple configuration.

(3) In some embodiments, in the above configuration (1), each of the at least one oil supply passage disposed corresponding to one area of the four areas communicates with an annular oil passage different from an annular oil passage with which each of the at least one oil supply passage disposed corresponding to an area not adjacent to the one area of the four areas communicates.

With the above configuration (3), since the oil supply passage disposed corresponding to one area and the oil supply passage disposed corresponding to an area not adjacent to the one area communicate with different annular oil passages, the oil supply routes to these areas can be separated. That is, since the oil supply routes are separated between the two high load areas or between the two low load areas, lubricant oil can be supplied to each of the four areas at pressure level suitable for each area. Thus, it is easier to supply lubricant oil to each area more appropriately.

(4) In some embodiments, in any one of the above configurations (1) to (3), the spindle comprises: a pin extending along the straight line in the cross-section between the pair of protruding portions, and a pair of slipper metals supported at both end portions of the pin and each of which has a first surface capable of sliding against the facing surfaces of the pair of protruding portions and a second surface capable of sliding against the male coupling part.

With the above configuration (4), each of the four areas includes a sliding portion between the first surface of the slipper metal and the female coupling part and a sliding portion between the second surface of the slipper metal and the male coupling part. Thus, it is possible to appropriately supply lubricant oil to these sliding portions.

(5) In some embodiments, in the above configuration (4), the at least one oil supply passage disposed corresponding to each of the four areas includes: a first passage communicating with a first space between the facing surface of each protruding portion and the first surface of each slipper metal; and a second passage communicating with a second space between the male coupling part and the second surface of each slipper metal.

With the above configuration (5), lubricant oil can be supplied to the first space between the protruding portion (female coupling part) and the first surface of the slipper metal through the first passage communicating with the first space, and lubricant oil can be supplied to the second space between the male coupling part and the second surface of the slipper metal through the second passage communicating with the second space. Thus, it is possible to appropriately supply lubricant oil to the engagement portion between the male coupling part and the female coupling part.

(6) In some embodiments, in the above configuration (5), the first passage and the second passage communicate with different annular oil passages among the plurality of annular oil passages.

With the above configuration (6), since the first passage communicating with the first space and the second passage communicating with the second space communicate with different annular oil passages, lubricant oil can be supplied to the first space and the second space at different pressure levels. Thus, it is easier to supply lubricant oil to each of the first space and the second space more appropriately.

(7) In some embodiments, in any one of the above configurations (1) to (6), the plurality of annular oil passages are formed at least partially by circumferential grooves provided on at least one of an outer peripheral surface of the annular rotor part or an inner peripheral surface of the annular stator part.

With the above configuration (7), since the plurality of annular oil passages are formed at least partially by circumferential grooves provided on at least one of the outer peripheral surface of the annular rotor part or the inner peripheral surface of the annular stator part of the rotary joint, lubricant oil supplied to the spindle via the annular stator part can be appropriately supplied through the annular oil passages to the engagement recess of the female coupling portion that rotates together with the annular rotor part.

(8) In some embodiments, in any one of the above configurations (1) to (7), the annular stator part includes a plurality of oil supply ports for supplying oil to the plurality of annular oil passages, respectively.

With the above configuration (8), lubricant oil supplied to the spindle through the oil supply ports disposed in the annular stator part of the rotary joint can be appropriately supplied through the annular oil passages disposed in the rotary joint to the engagement recess of the female coupling portion that rotates together with the annular rotor part.

(9) In some embodiments, in any one of the above configurations (1) to (8), the plurality of annular oil passages are displaced from each other in the axial direction.

With the above configuration (9), since the plurality of annular oil passages are displaced from each other in the axial direction, lubricant oil from different supply sources can be appropriately supplied to the engagement recess of the female coupling part through the plurality of annular oil passages, separately.

(10) In some embodiments, in any one of the above configurations (1) to (9), the female coupling part includes a plurality of axial oil passages connecting any of the plurality of oil supply passages and any of the plurality of annular oil passages. The plurality of axial oil passages are displaced from each other in the circumferential direction.

With the above configuration (10), since the axial oil passages are displaced from each other in the circumferential direction, the machining to connect the axial oil passages and the annular oil passages is relatively easy.

(11) In some embodiments, in any one of the above configurations (1) to (10), the spindle comprises a seal part disposed between a pair of annular oil passages among the plurality of annular oil passages and configured to reduce leakage of lubricant oil between the pair of annular oil passages.

With the above configuration (11), since the seal part is disposed between the pair of annular oil passages to reduce leakage of lubricant oil between the annular oil passages, it is possible to appropriately maintain the pressure levels of the oil supply routes corresponding to the annular oil passages, respectively. Thus, it is possible to appropriately supply lubricant oil to both the high load area and the low load area of the engagement recess of the female coupling part.

(12) A rolling facility according to at least one embodiment of the present invention comprises: the spindle described in any one of the above (1) to (11); and a plurality of oil supply lines, connected to the spindle, for supplying oil to the plurality of annular oil passages, respectively.

With the above configuration (12), the oil supply passages disposed corresponding to adjacent areas (one high load area and the other low load area) of the four areas of the engagement recess of the female coupling part communicate with different annular oil passages, and these annular oil passages are supplied with oil from separate oil supply lines. That is, oil from different oil supply lines (oil supply sources) are supplied to the oil supply passages disposed corresponding to the high load area and the low load area, respectively. Thus, it is possible to appropriately supply lubricant oil to both the high load area and the low load area.

(13) In some embodiments, in the above configuration (12), the rolling facility comprises a plurality of pumps disposed on the plurality of oil supply lines, respectively.

With the above configuration (13), since the pumps are individually disposed for the plurality of oil supply lines, the pressure level of each oil supply line can be individually adjusted. Thus, it is possible to appropriately supply lubricant oil to both the high load area and the low load area.

(14) In some embodiments, in the above configuration (12) or (13), the rolling facility comprises a switch valve capable of switching a connection destination of the plurality of annular oil passages between the plurality of oil supply lines.

In a reverse rolling apparatus configured to roll a material while reciprocating the material, the mill rolls and the spindles rotate in opposite directions between forward and return passes of the material. Further, high and low load areas in the four areas of the engagement recess of the female coupling part are switched between the forward and return passes of the material. In this regard, according to the embodiment (14), with the switch valve capable of switching the connection destination of the annular oil passages between the oil supply lines, the area to which oil is supplied from each oil supply line can be switched by operating the switch valve appropriately with the change in the direction of rotation of the mill rolls and the spindles. Thus, in a reverse rolling apparatus, on both forward and return passes of a material, it is possible to appropriately supply lubricant oil to both the high load area and the low load area.

(15) In some embodiments, in any one of the above configurations (12) to (14), the plurality of oil supply lines are disposed independently of each other.

With the above configuration (15), since the plurality of oil supply lines are disposed independently of each other, it is possible to appropriately maintain the pressure levels of the oil supply routes corresponding to the annular oil passages, respectively. Thus, it is possible to appropriately supply lubricant oil to both the high load area and the low load area of the engagement recess of the female coupling part.

Embodiments of the present invention were described in detail above, but the present invention is not limited thereto, and various amendments and modifications may be implemented within the scope of the appended claims.

### Reference Signs List

- 10: Rolling facility
- 12: Mill roll
- 14: Axle box
- 16: Axle box
- 18: Backup roll
- 20: Axle box
- 22: Axle box
- 24: Driving device
- 26: Spindle
- 28: Coupling
- 30: Driving shaft
- 31: Recess
- 32: Female coupling part
- 33: Engagement recess
- 34A: Protruding portion
- 34B: Protruding portion
- 35A: Facing surface
- 35B: Facing surface
- 36: Male coupling part
- 37A: Protruding portion
- 37B: Protruding portion
- 38: Engagement projection
- 39A: Surface
- 39B: Surface
- 40A: Slipper metal
- 40B: Slipper metal
- 41: First surface
- 42: Pin
- 43: Second surface
- 44 (44a to 44d): Axial oil passage
- 46 (46a to 46d): Axial oil passage
- 52: Hole
- 60: Rotary joint
- 62: Annular rotor part
- 63: Outer peripheral surface
- 64: Circumferential groove
- 66: Radial passage
- 67: Radial passage
- 68: Axial passage
- 69: Axial passage
- 70: Circumferential groove
- 72: Radial passage
- 73: Radial passage
- 74: Axial passage
- 75: Axial passage
- 76: Annular stator part
- 77: Inner peripheral surface
- 80: Circumferential groove
- 82: Circumferential groove
- 84: Oil supply port
- 86: Oil supply port
- 87: Seal part
- 88: Seal part
- 89: Seal part
- 90 (90a to 90d): Oil supply passage
- 92 (92a to 92d): Oil supply passage
- 93: Oil supply passage
- 94 (94a to 94d): First space
- 96 (96a to 96d): Second space
- 98: Projection
- 101 to 104: Annular oil passage
- 110 (110A to110D): Oil supply line
- 112 (112A to 112D): Pump
- 114 (114A, 114B): Switch valve
- A1 to A4: Area
- Lc: Center line
- O: Rotational axis

## Claims

1. A spindle for transmitting a rotational driving force to a mill roll, comprising:
a female coupling part (32) having at one end side an engagement recess (33) capable of receiving an engagement projection of a male coupling part (36); and
a rotary joint (60) including an annular rotor part (62) disposed at another end side of the female coupling part and configured to rotate together with the female coupling part, and an annular stator part (76) disposed on an outer peripheral side of the annular rotor part,
wherein the female coupling part includes at the one end side a pair of protruding portions (34A, 34B) each of which has a facing surface defining the engagement recess (33),
wherein the female coupling part has a plurality of oil supply passages (90, 92) for supplying oil
to the engagement recess,
wherein the rotary joint has a plurality of annular oil passages (101-104) each of which communicates with any of the plurality of oil supply passages,
wherein the plurality of oil supply passages (90, 92) includes at least one oil supply passage disposed corresponding to each of four areas (A1-A4) obtained by dividing the engagement recess by a center line between the pair of facing surfaces and a straight line perpendicular to the center line, in a cross-section perpendicular to an axial direction of the spindle, and
**characterised in that** the at least one oil supply passage (90, 92) disposed corresponding to one area of the four areas communicates with, among the plurality of annular oil passages, an annular oil passage (101-104) different from an annular oil passage with which the at least one oil supply passage disposed corresponding to an area adjacent to the one area of the four areas communicates.

2. The spindle according to claim 1,
wherein each of the at least one oil supply passage disposed corresponding to one area of the four areas communicates with an annular oil passage identical to an annular oil passage with which any of the at least one oil supply passage disposed corresponding to an area not adjacent to the one area of the four areas communicates.

3. The spindle according to claim 1,
wherein each of the at least one oil supply passage disposed corresponding to one area of the four areas communicates with an annular oil passage different from an annular oil passage with which each of the at least one oil supply passage disposed corresponding to an area not adjacent to the one area of the four areas communicates.

4. The spindle according to any one of claims 1 to 3, comprising:
a pin (42) extending along the straight line in the cross-section between the pair of protruding portions (34A, 34B), and
a pair of slipper metals (40A, 40B) supported at both end portions of the pin and each of which has a first surface (41) capable of sliding against the facing surfaces (35A, 35B) of the pair of protruding portions (34A, 34B) and a second surface capable of sliding against the male coupling part.

5. The spindle according to claim 4, wherein the at least one oil supply passage (90, 92) disposed corresponding to each of the four areas includes:
a first passage (90a-90d) communicating with a first space (94) between the facing surface of each protruding portion and the first surface of each slipper metal; and
a second passage (92a-92d) communicating with a second space (96) between the male coupling part and the second surface of each slipper metal.

6. The spindle according to claim 5,
wherein the first passage (90a-90d) and the second passage (92a-92d) communicate with different annular oil passages (101-104) among the plurality of annular oil passages.

7. The spindle according to any one of claims 1 to 6,
wherein the plurality of annular oil passages (101-104) are formed at least partially by circumferential grooves (64, 70, 80, 82) provided on at least one of an outer peripheral surface (63) of the annular rotor part or an inner peripheral surface (77) of the annular stator part.

8. The spindle according to any one of claims 1 to 7,
wherein the annular stator part (76) includes a plurality of oil supply ports (84, 86) for supplying oil to the plurality of annular oil passages (101-104), respectively.

9. The spindle according to any one of claims 1 to 8,
wherein the plurality of annular oil passages (101-104) are displaced from each other in the axial direction.

10. The spindle according to any one of claims 1 to 9,
wherein the female coupling part includes a plurality of axial oil passages (44, 46) connecting any of the plurality of oil supply passages (90, 92) and any of the plurality of annular oil passages (101-104), and
wherein the plurality of axial oil passages are displaced from each other in a circumferential direction.

11. The spindle according to any one of claims 1 to 10, comprising a seal part (87-89) disposed between a pair of annular oil passages (101-104) among the plurality of annular oil passages and configured to reduce leakage of lubricant oil between the pair of annular oil passages.

12. A rolling facility, comprising:
the spindle according to any one of claims 1 to 11; and
a plurality of oil supply lines (110A-110D), connected to the spindle, for supplying oil to the plurality of annular oil passages (101-104), respectively.

13. The rolling facility according to claim 12, comprising a plurality of pumps (112A, 112B) disposed on the plurality of oil supply lines, respectively.

14. The rolling facility according to claim 12 or 13, comprising a switch valve (114A, 114B) capable of switching a connection destination of the plurality of annular oil passages (101-104) between the plurality of oil supply lines (110A-110D). .

15. The rolling facility according to any one of claims 12 to 14,
wherein the plurality of oil supply lines (110A-110D) are disposed independently of each other

## Patentansprüche

1. Spindel zum Übertragen einer Rotationsantriebskraft auf eine Walze, umfassend:
ein weibliches Kupplungsteil (32), das an einer Endseite eine Eingriffsaussparung (33) aufweist, die einen Eingriffsvorsprung eines männlichen Kupplungsteils (36) aufnehmen kann; und
eine Rotationsverbindung (60) mit einem ringförmigen Rotorteil (62), das an einer anderen Endseite des weiblichen Kupplungsteils angeordnet ist und dazu eingerichtet ist, zusammen mit dem weiblichen Kupplungsteil zu rotieren, und einem ringförmigen Statorteil (76), das an einer äußeren Umfangsseite des ringförmigen Rotorteils angeordnet ist,
wobei das weibliche Kupplungsteil an der einen Endseite ein Paar vorstehender Abschnitte (34A, 34B) aufweist, von denen jeder eine zugewandte Fläche hat, die die Eingriffsaussparung (33) definiert,
wobei das weibliche Kupplungsteil mehrere Ölzuführungspassagen (90, 92) zum Zuführen von Öl zu der Eingriffsaussparung aufweist,
wobei die Rotationsverbindung mehrere ringförmigen Ölpassagen (101-104) aufweist, von denen jede mit irgendwelchen der Ölzufuhrpassagen in Kommunikation steht,
wobei die mehreren Ölzuführungspassagen (90, 92) mindestens eine Ölzuführungspassage enthalten, die entsprechend jedem von vier Bereichen (A1-A4) angeordnet ist, die durch Unterteilung der Eingriffsaussparung durch eine Mittellinie zwischen dem Paar von zugewandten Flächen und einer geraden Linie senkrecht zu der Mittellinie in einem Querschnitt senkrecht zu einer axialen Richtung der Spindel erhalten werden, und
**gekennzeichnet dadurch, dass** die mindestens eine Ölzuführungspassage (90, 92), die entsprechend einem Bereich der vier Bereiche angeordnet ist, mit einer ringförmigen Ölpassage (101-104) aus den mehreren ringförmigen Ölpassagen in Kommunikation steht, die von einer ringförmigen Ölpassage verschieden ist, mit der die mindestens eine Ölzuführungspassage, die entsprechend einem dem einen Bereich benachbarten Bereich der vier Bereiche angeordnet ist, in Kommunikation steht.

2. Spindel nach Anspruch 1,
wobei jede der mindestens einen Ölzuführungspassage, die entsprechend einem Bereich der vier Bereiche angeordnet ist, mit einer ringförmigen Ölpassage in Kommunikation steht, die identisch ist mit einer ringförmigen Ölpassage, mit der irgendeine der mindestens einen Ölzuführungspassage in Kommunikation steht, die entsprechend einem Bereich angeordnet ist, der nicht dem einen Bereich der vier Bereiche benachbart ist.

3. Spindel nach Anspruch 1,
wobei jede der mindestens einen Ölzuführungspassage, die entsprechend einem Bereich der vier Bereiche angeordnet ist, mit einer ringförmigen Ölpassage in Kommunikation steht, die von einer ringförmigen Ölpassage verschieden ist, mit der jeder der mindestens einen Ölzuführungspassage in Kommunikation steht, die entsprechend einem Bereich angeordnet ist, der nicht dem einen Bereich der vier Bereiche benachbart ist.

4. Spindel nach einem der Ansprüche 1 bis 3, umfassend:
einen Zapfen (42), der entlang der geraden Linie im Querschnitt zwischen dem Paar vorstehender Abschnitte (34A, 34B) verläuft, und
ein Paar von Gleitmetallteilen (40A, 40B), die an beiden Endabschnitten des Zapfens gelagert sind und von denen jedes eine erste Oberfläche (41), die gegen die zugewandten Oberflächen (35A, 35B) des Paars vorstehender Abschnitte (34A, 34B) gleiten kann, und eine zweite Oberfläche, die gegen das männliche Kupplungsteil gleiten kann, aufweist.

5. Spindel nach Anspruch 4,
wobei die mindestens eine Ölzuführungspassage (90, 92), die entsprechend jedem der vier Bereiche angeordnet ist, enthält:
eine erste Passage (90a-90d), die mit einem ersten Raum (94) zwischen der zugewandten Oberfläche jedes vorspringenden Abschnitts und der ersten Oberfläche jedes Gleitmetallteils in Kommunikation steht; und
eine zweite Passage (92a-92d), die mit einem zweiten Raum (96) zwischen dem männlichen Kupplungsteil und der zweiten Oberfläche jedes Gleitmetallteils in Kommunikation steht.

6. Spindel nach Anspruch 5,
wobei die erste Passage (90a-90d) und die zweite Passage (92a-92d) mit verschiedenen ringförmigen Ölpassagen (101-104) aus den mehreren ringförmigen Ölpassagen in Kommunikation stehen.

7. Spindel nach einem der Ansprüche 1 bis 6,
wobei die mehreren ringförmigen Ölpassagen (101-104) zumindest teilweise durch Umfangsnuten (64, 70, 80, 82) gebildet sind, die auf einer äußeren Umfangsfläche (63) des ringförmigen Rotorteils und/oder einer inneren Umfangsfläche des ringförmigen Statorteils (77) vorgesehen sind.

8. Spindel nach einem der Ansprüche 1 bis 7,
wobei das ringförmige Statorteil (76) mehrere Ölzuführungsanschlüsse (84, 86) für das Zuführen von Öl jeweils zu den mehreren ringförmigen Ölpassagen (101-104) aufweist.

9. Spindel nach einem der Ansprüche 1 bis 8,
wobei die mehreren ringförmigen Ölpassagen (101-104) in axialer Richtung gegeneinander versetzt sind.

10. die Spindel nach einem der Ansprüche 1 bis 9,
wobei das weibliche Kupplungsteil mehrere axiale Ölpassagen (44, 46) aufweist, die jede der mehreren Ölzuführungspassagen (90, 92) und jede der mehreren ringförmigen Ölpassagen (101-104) verbinden, und
wobei die mehreren axialen Ölpassagen in einer Umfangsrichtung gegeneinander versetzt sind.

11. Spindel nach einem der Ansprüche 1 bis 10, die ein Dichtungsteil (87-89) umfasst, das zwischen einem Paar ringförmiger Ölpassagen (101-104) aus den mehreren ringförmigen Ölpassage angeordnet ist und dazu eingerichtet ist, Leckage von Schmieröl zwischen dem Paar ringförmiger Ölpassagen zu verringern.

12. Walzanlage, umfassend:
die Spindel nach einem der Ansprüche 1 bis 11; und
mehrere Ölzuführungsleitungen (110A-110D), die mit der Spindel verbunden sind, zum Zuführen von Öl jeweils zu den mehreren ringförmigen Ölpassagen.

13. Walzanlage nach Anspruch 12 umfassend mehrere Pumpen (11aA, 112B), die jeweils auf den mehreren Ölzuführungsleitungen angeordnet sind.

14. Walzanlage nach Anspruch 12 oder 13, umfassend ein Umschaltventil (114A, 114B), das ein Verbindungsziel der mehreren ringförmigen Ölpassagen (101-104) zwischen den mehreren Ölzuführungsleitungen (110A-110D) umschalten kann.

15. Walzanlage nach einem der Ansprüche 12 bis 14,
wobei die mehreren Ölzuführungsleitungen (110A-110D) unabhängig voneinander angeordnet sind.

## Revendications

1. Broche pour transmettre une force d'entraînement en rotation à un cylindre de laminoir, comprenant :
une partie (32) d'accouplement femelle ayant sur un côté d'extrémité un renfoncement (33) d'engagement apte à recevoir une projection d'engagement d'une partie (36) d'accouplement mâle ; et
un joint tournant (60) incluant une partie (62) de rotor annulaire disposée sur un autre côté d'extrémité de la partie d'accouplement femelle et configuré pour tourner en même temps que la partie d'accouplement femelle, et une partie (76) de stator annulaire disposée sur un côté périphérique extérieur de la partie de rotor annulaire,
dans laquelle la partie d'accouplement femelle inclut sur le côté d'extrémité une paire de parties en saillie (34A, 34B) dont chacune a une surface de face définissant le renfoncement (33) d'engagement,
dans laquelle la partie d'accouplement femelle a une pluralité de passages (90, 92) d'alimentation d'huile pour alimenter de l'huile dans le renfoncement d'engagement,
dans laquelle le joint tournant a une pluralité de passages (101-104) d'huile annulaires dont chacun communique avec un quelconque parmi la pluralité de passages d'alimentation d'huile,
dans laquelle la pluralité de passages (90, 92) d'alimentation d'huile inclut au moins un passage d'alimentation d'huile disposé correspondant à chacune de quatre zones (A1-A4) obtenues en divisant le renfoncement d'engagement par une ligne centrale entre la paire de surfaces de face et une ligne droite perpendiculaire à la ligne centrale, dans une coupe transversale perpendiculaire à un sens axial de la broche, et
**caractérisée en ce que** l'au moins un passage (90, 92) d'alimentation d'huile disposé correspondant à une zone parmi les quatre zones communique avec, parmi la pluralité de passages d'huile annulaires, un passage (101-104) d'huile annulaire différent d'un passage d'huile annulaire avec lequel l'au moins un passage d'alimentation d'huile disposé correspondant à une zone adjacente à la zone parmi les quatre zones communique.

2. Broche selon la revendication 1,
dans laquelle chacun de l'au moins un passage d'alimentation d'huile disposé correspondant à une zone parmi les quatre zones communique avec un passage d'huile annulaire identique à un passage d'huile annulaire avec lequel un quelconque de l'au moins un passage d'alimentation d'huile disposé correspondant à une zone non adjacente à la zone parmi les quatre zones communique.

3. Broche selon la revendication 1,
dans laquelle chacun de l'au moins un passage d'alimentation d'huile disposé correspondant à une zone parmi les quatre zones communique avec un passage d'huile annulaire différent d'un passage d'huile annulaire avec lequel chacun de l'au moins un passage d'alimentation d'huile disposé correspondant à une zone non adjacente à la zone parmi les quatre zones communique.

4. Broche selon l'une quelconque des revendications 1 à 3, comprenant :
une goupille (42) s'étendant le long de la ligne droite dans la section transversale entre la paire de parties en saillie (34A, 34B), et
une paire de métaux (40A, 40B) de glissement supportés aux deux parties d'extrémité de la goupille et dont chacun a une première surface (41) apte à glisser contre les surfaces (35A, 35B) de face de la paire de parties en saillie (34A, 34B) et une deuxième surface apte à glisser contre la partie d'accouplement mâle.

5. Broche selon la revendication 4,
dans laquelle l'au moins un passage (90, 92) d'alimentation d'huile disposé correspondant à chacune des quatre zones inclut :
un premier passage (90a-90d) communiquant avec un premier espace (94) entre la surface de face de chaque partie en saillie et la première surface de chaque métal de glissement ; et
un deuxième passage (92a-92d) avec un deuxième espace (96) entre la partie d'accouplement mâle et la deuxième surface de chaque métal de glissement.

6. Broche selon la revendication 5,
dans laquelle le premier passage (90a-90d) et le deuxième passage (92a-92d) communiquent avec des passages (101-104) d'huile annulaires différents parmi la pluralité de passages d'huile annulaires.

7. Broche selon l'une quelconque des revendications 1 à 6,
dans laquelle la pluralité de passages (101-104) d'huile annulaires sont formés au moins partiellement par des rainures circonférentielles (64, 70, 80, 82) prévues sur au moins une d'une surface périphérique extérieure (63) de la partie de rotor annulaire ou d'une surface périphérique intérieure (77) de la partie de stator annulaire.

8. Broche selon l'une quelconque des revendications 1 à 7,
dans laquelle la partie (76) de stator annulaire inclut une pluralité d'orifices (84, 86) d'alimentation d'huile pour alimenter de l'huile dans la pluralité de passages (101-104) d'huile annulaires, respectivement.

9. Broche selon l'une quelconque des revendications 1 à 8,
dans laquelle la pluralité de passages (101-104) d'huile annulaires sont déplacés les uns par rapport aux autres dans le sens axial.

10. Broche selon l'une quelconque des revendications 1 à 9,
dans laquelle la partie d'accouplement femelle inclut une pluralité de passages (44, 46) d'huile axiaux connectant un quelconque parmi la pluralité de passages (90, 92) d'alimentation d'huile et un quelconque parmi la pluralité de passages (101-104) d'huile annulaires, et
dans laquelle la pluralité de passages d'huile axiaux sont déplacés les uns par rapport aux autres dans un sens circonférentiel.

11. Broche selon l'une quelconque des revendications 1 à 10, comprenant une partie (87-89) d'étanchéité disposée entre une paire de passages (101-104) d'huile annulaires parmi la pluralité de passages d'huile annulaires et configurée pour réduire une fuite d'huile de lubrification entre la paire de passages d'huile annulaires.

12. Installation de laminage, comprenant :
la broche selon l'une quelconque des revendications 1 à 11 ; et
une pluralité de lignes (110A-110D) d'alimentation d'huile connectées à la broche, pour alimenter de l'huile dans la pluralité de passages (101-104) d'huile annulaires, respectivement.

13. Installation de laminage selon la revendication 12, comprenant une pluralité de pompes (112A, 112B) disposées sur la pluralité de lignes d'alimentation d'huile, respectivement.

14. Installation de laminage selon la revendication 12 ou 13, comprenant une vanne (114A, 114B) de commutation apte à commuter une destination de connexion de la pluralité de passages (101-104) d'huile annulaires entre la pluralité de lignes (110A-110D) d'alimentation d'huile.

15. Installation de laminage selon l'une quelconque des revendications 12 à 14,
dans laquelle la pluralité de lignes (110A-110D) d'alimentation d'huile sont disposées indépendamment les unes des autres.
